# EUROPEAN PATENT APPLICATION

(11) **EP 4 752 166 A1**
(43) Date of publication of application: **03.06.2026**
(21) Application number: 24216571.0
(22) Date of filing: 29.11.2024
(51) Int. Cl.: C08G 63/183, C08G 63/672, C08L 67/02, C08G 63/91

(54) **POLYESTER FOR THE PRODUCTION OF MELT-BLOWN NON-WOVEN**

(71) Applicant: Indorama Ventures Public Company Ltd, 10110 Bangkok (TH)
(72) Inventor: GRASSER, Werner, 86391 Stadtbergen (DE); BEKMAN, Yan, 4952707 Petah Tikva (IL); ERGUNEY, Fatih, 4952707 Petah Tikva (IL); GROYSMAN, Alexander, 4952707 Petah Tikva (IL); KOTZER, Asaf, 4952707 Petah Tikva (IL); SCHREINER, Roland, 86399 Bobingen (DE); DESAI, Prashant, 10110 Bangkok (TH); DAHRINGER, Jörg, 86399 Bobingen (DE)
(74) Representative: Dörr, Klaus

(57) **Abstract**

The invention relates to a polyester raw material for the production of melt-blown PET fibers, a method for their production and their use for the production of melt-blown non-woven.

## Description

The invention relates to a polyester raw material for the production of melt-blown PET fibers, a method for their production and their use for the production of melt-blown non-woven.

The melt-blown process is a melt-blowing process which involves extruding a molten polymer through die orifices, stretching the extrudates into fibers by exposure to a high-temperature, high-velocity gas blowing near the orifices, and collecting the thus formed fibers on an air-permeable conveyor belt such as a wire mesh or the like, whereby the fibers formed are collected and a non-woven fabric is formed.

The melt-blown process is therefore suitable for directly producing nonwovens that include microfine fibers that cannot be produced by other processes. One of the characteristics of the melt-blowing process is to extrude a thermoplastic polymer whose melt viscosity is about an order of magnitude lower than that used in conventional melt-spinning of general-purpose fibers. To achieve the lower melt viscosity, it becomes necessary either to use a polymer with a lower degree of polymerization than those used for conventional melt spinning or to increase the temperature of the polymer to be extruded. In principle, any polymer that satisfies the above conditions can theoretically be used to make melt-blown non-woven fabrics.

Non-woven made from melt-blown fibers are used in various applications and have to meet a wide range of requirements. Various polymer materials are described as raw materials for the production of melt-blown fibers. Suitable polymer materials include polyolefins, for example polyethylene and/or polypropylene, and also polyester, in particular PLA and PBT, as well as PU and special plastics such as PPS and TPU [see https://www.oerlikon.com/polymer-processing/de/loesungen-technologies /from-the-melt-to-/nonwoven-material/?tab=meltblown plant solutions en is also called PET ].

Melt-blown non-woven available on the market are mostly based on various polyolefins, polyamides, polyesters and polyurethanes. However, within the polyester product class, melt-blown nonwoven fabrics comprising polyethylene terephthalate (hereinafter referred to as "PET") are relatively rare, although PET is one of the most common representatives of polyesters, with advantages in terms of good quality and low cost. This appears to be partly due to PET's low rate of crystallization compared to other crystalline polymers used for melt-blown fabrics.

When extruding PET under the usual melt-blowing conditions, PET crystallinity does not sufficiently increase, although it can be easily refined into fibers. This leads to microfine PET fibers which have low thermal stability and high shrinkage, particularly when the fibers are submitted to temperatures higher than 70-80°C., i.e. above the glass transition temperature of the polymer. Especially uncontrolled shrinkage occurring during or after collecting the melt blown web is undesirable in web production.

In the state of the art, for example in Japanese Patent Application Publishing No. 45768/1991, it is therefore proposed to subject the formed PET melt-blown non-woven fabric to a suitable in-line heat treatment under mechanical stress, such as drawing, as a result of which the crystallinity of the polymers is increased. However, this process requires an additional heat treatment step while yielding a nonwoven fabric with lower strength and stiffness than other melt-blown non-woven fabrics made from conventional readily crystallizable polymers.

In the state of the art, other approaches to overcome the above disadvantaged are described, such as in the published Japanese patent application 90663/1980. Here, a special geometry of the blowing duct and a small distance to the conveyor belt are proposed to produce PET melt-blown fibers. The PET polymers used here have a molecular weight corresponding to an intrinsic viscosity (IV), measured in a solution of 1 g of polymer in 100 ml of dichloroacetic acid at 25°C, of at least 0.55, preferably at least 0.6. Other specific geometries of the blowing duct and specific distances to the conveyor belt are described in Japanese Patent Application Publishing No. 201564/1989.

The problems outlined above result in a second different thermoplastic polymer also processed or blended with the PET material to be melt-blown into PET melt-blown non-woven. In such approach, in the melt-blow process, i.e. a polymer blend, for example with polyolefins, is added which at least partially compensate for the existing deficits of the raw materials and the nonwoven material, see for example EP-A-0527489 and EP-A-3730684. The production of single-variety PET melt-blown non-wovens, i.e. non-woven that consists of only one polymer class, is therefore not accomplished. In view of the increasing demand in terms of recyclability, this is problematic and a demand for such materials is present.

The problems set out above mean that the commercial availability of melt-blown PET non-wovens, which consist exclusively of PET as the only thermoplastic polymer, is currently limited and other polyesters, for example PBT, are usually used as polyester, which on the one hand has a relatively high crystallization rate, but on the other hand is considerably more expensive than PET.

Against this background, it is desirable to provide a polyester raw material for the production of melt-blown PET fibers and melt-blown PET fiber non-woven, which on the one hand can be made available on an industrial, commercial scale and can also be processed on existing melt-blowing systems on an industrial, commercial scale and beyond provides melt-blown PET fibers and melt-blown PET fiber non-woven that meet the diverse requirements.

The object of the present invention was therefore to provide a polyester raw material for the production of melt-blown PET fibers and melt-blown PET fiber non-woven which satisfies the requirements mentioned above.

Within the scope of the present invention, a PET material is developed which is suitable for the production of melt-blown PET fiber and melt-blown PET fiber non-woven which consist exclusively of PET as the only thermoplastic polymer and do not require the addition of a blend polymer. In addition, the present PET material can be processed on conventional, commercially available melt-blowing systems without the melt-blowing system having to be extensively modified. As a result, the melt-blowing system can continue to be used for other polymer materials, so that a changeover to other polymers does not result in an extensive conversion of the system.

Within the scope of the present invention, the instant inventors found that a polymer material comprising at least 90% by weight of polyethylene terephthalate polymer which provides on one hand a specific solution viscosity and on the other hand a certain ration of melt viscosity at different shear rates allows to process PET into melt-blown PET fiber on conventional, commercially available melt-blowing systems without the melt-blowing system having to be extensively modified.

The subject matter of the present invention is therefore a polymer material comprising at least 90% by weight, preferably at least 95% by weight, of polyethylene terephthalate polymer, said PET polymer comprising at least 90 mol% of the repeating structural unit of the formula 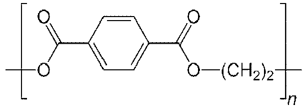 characterized in that the polyethylene terephthalate polymer has:
(i) a specific solution viscosity (SV) from 425 to 650 and
(ii) a melt viscosity eta (in Pa*s) at shear rates of 200 s⁻¹ (eta 200) and 1200 s⁻¹ (eta 1200) from 5 to 40 at 270°C with the proviso that the ration of eta at shear rate of 200 s⁻¹ over eta at shear rate 1200 s⁻¹ (Q-eta) is from 0.92 to 1.08, said polymer material does not include any thermoplastic polymer other than the aforementioned polyethylene terephthalate polymer.

In a further preferred embodiment, the polymer material comprises at least 95% by weight of polyethylene terephthalate polymer, said PET polymer comprising at least 90 mol% of the repeating structural unit of the formula 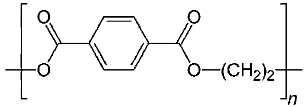 characterized in that the polyethylene terephthalate polymer has:
(i) a specific solution viscosity (SV) from 425 to 650 and
(ii) a melt viscosity eta (in Pa*s) at shear rates of 200 s⁻¹ (eta 200) and 1200 s⁻¹ (eta 1200) from 5 to 40 at 270°C with the proviso that the ration of eta at shear rate of 200 s⁻¹ over eta at shear rate 1200 s⁻¹ (Q-eta) is from 0.92 to 1.08, and
(iii) a molecular weight corresponding to an intrinsic viscosity (IV) of ≤ 0.5 dl/g, preferably from 0.3 to 0.5 dl/g, in particular from 0.3 to 0.45 dl/g and
(iv) an enthalpy of fusion Δ H ₘ of ≥ 47J/g and
(v) a hot crystallization temperature on cooling from the melt T_{hc} of ≥200°C and
(vi) a hot crystallization enthalpy during cooling from the melt ΔH_{hc} of ≥42 J/g,
(vii) and optionally a cold crystallization temperature when heating the amorphous polymer T_{cc} of ≤130°C,
said polymer material does not include any thermoplastic polymer other than the aforementioned polyethylene terephthalate polymer.

By the aforementioned and later used term said polymer material does not include any thermoplastic polymer other than the aforementioned polyethylene terephthalate polymer the presence of any other thermoplastic polymer is limited to a maximum of <1 weight % of the total polymer material.

### PET material

PET within the present invention are polyethylene terephthalates which are predominantly formed from underlying aromatic dicarboxylic acids and aliphatic diols.

In this context, aromatic dicarboxylic acids are understood to be divalent radicals of benzene-dicarboxylic acids, in particular terephthalic acid. Aliphatic diols are understood to mean diols having 2 to 4 carbon atoms, preference being given to ethylene glycol.

The PET according to the invention consists of at least 90 mol % of polyethylene terephthalate. The remaining 10 mol % may comprise dicarboxylic acid units other than terephthalic acid, particularly isophthalic acid, and glycol units other than ethylene glycol, particularly propanediol, butanediol and/or diethylene glycol, triethylene glycol, polyethylene glycol having a molecular weight of about 500-2000. These are also referred to as modifiers. Other modifiers can be aliphatic dicarboxylic acids, neopentyl glycol, 2-methyl-1,3-propanediol, pentaerythritol, trimethylolpropane (TMP).

PET containing at least 95 mol % of polyethylene terephthalate (PET), in particular those made from unmodified PET, are particularly preferred.

Some applications require the polyester to be further modified. Such modifiers for polyesters are known, for example additions of halogen compounds, in particular bromine compounds. In addition, the polymer can also be modified by phosphorus compounds covalently bonded to the polyester chain. The modified PET preferably contains structural units of the formula (I) 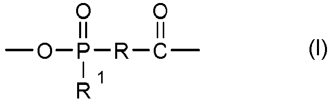 in which
- R: is alkylene or poly-methylene having 2 to 6 carbon atoms or phenyl and
- R¹: is alkyl having 1 to 6 carbon atoms, aryl or aralkyl and

As mentioned, the structural units of the formula (I) are covalently bonded to the polymer, preferably to the backbone of the polyester.

In the formula (I), R is preferably ethylene and R¹ is methyl, ethyl, phenyl or o-, m- or p-methyl-phenyl, in particular methyl, phenyl.

Typically, in the aforementioned phosphorus modified PET, the structural units of the above formula (I) are present, typically at least 0.001 Mol-% and up to 5 Mol-%.

To such extent, the aforementioned phosphorus modified PET is a flame-retardant modified PET, the structural units of the above formula (I) are present in amounts ranging from 2 to 5 Mol-%. Such materials are described in DE-A-39 40 713, for example.

The PET according to the invention has a specific solution viscosity (SV) from 425 to 650 , preferably from 450 to 550 and a melt viscosity eta (in Pa*s) at shear rates of 200 s⁻¹ (eta 200) and 1200 s⁻¹ (eta 1200) from 5 to 40 at 270°C with the proviso that the ration of eta at shear rate of 200 s⁻¹ over eta at shear rate 1200 s⁻¹ (Q-eta) is from 0.92 to 1.08.

It was found that the melt blowing behavior was particularly favorable when the ratio of melt viscosities eta(200) over eta(1200) of the respective PET is close to unity. When Q-eta is much higher the respective PET showed insufficient melt blowing properties and high shrinkage during the melt blowing process.

The aforementioned specific solution viscosity and melt viscosity eta and its ratio describe a PET which has nearly Newtonian flow behaviors in the melt being processed to melt-blown PET fibers and thus allowing to produce melt-blown PET fibers on existing equipment while being merely pure PET melt-blown fibers

The afore term pure PET melt-blown fibers means that the polymer material does not include any thermoplastic polymer other than the aforementioned polyethylene terephthalate polymer and the presence of any other thermoplastic polymer is limited to a maximum of <1 weight % of the total polymer material.

Preferably, the PET according to the invention has a molecular weight corresponding to an intrinsic viscosity (IV), measured in a solution of 1 g of polymer in 100 ml of dichloroacetic acid at 25°C., of ≦0.5 dl/g, preferably from 0.3 to 0.5 dl/g, in particular from 0.3 to 0.45 dl/g.

Most preferably, the PET according to the invention has a specific solution viscosity (SV) from 425 to 650 , preferably from 450 to 550 and a melt viscosity eta (in Pa*s) at shear rates of 200 s⁻¹ (eta 200) and 1200 s⁻¹ (eta 1200) from 5 to 40 at 270°C with the proviso that the ration of eta at shear rate of 200 s⁻¹ over eta at shear rate 1200 s⁻¹ (Q-eta) is from 0.92 to 1.08, and a molecular weight corresponding to an intrinsic viscosity (IV) of ≤ 0.5 dl/g, preferably from 0.3 to 0.5 dl/g, in particular from 0.3 to 0.45 dl/g.

Preferably, the PET according to the invention has an enthalpy of fusion ΔH m of ≥ 47J/g, preferably in the range 47-62 J/g.

Preferably, the PET according to the invention has a hot crystallization temperature during cooling from the melt T_{hc} of ≥200°C, preferably in the range of 200-230°C.

Preferably, the PET according to the invention has a hot crystallization enthalpy when cooling from the melt ΔH _{hc} of ≥42 J/g, preferably in the range of 42-55 J/g.

Preferably, the PET according to the invention, preferably has a cold crystallization temperature when heating the amorphous polymer T_{cc} of ≤130°C, more preferably in the range of 110-130°C.

Typically, the PET according to the invention has a melting temperature Tₘ in the range of 250-265°C. In case of phosphorus modified PET, the melting temperature Tₘ is lower, typically in the range of 230-265°C.

In case the PET comprise dicarboxylic acid units other than terephthalic acid, particularly isophthalic acid, the melting temperature Tₘ is much lower than for the aforementioned phosphorus modified PET and can be in the of 200-265°C.

Typically, the PET according to the invention, preferably has a glass transition temperature T_{g} in the range from 65-75°C

The PET according to the invention particularly preferably has the following features:
(i) a specific solution viscosity (SV) from 425 to 650 and
(ii) a melt viscosity eta (in Pa*s) at shear rates of 200 s⁻¹ and 1200 s⁻¹ from 5 to 40 at 270°C with the proviso that the ration of eta at shear rate of 200 s⁻¹ over eta at shear rate 1200 s⁻¹ (Q-eta) is from 0.92 to 1.08, and
(iii) a molecular weight corresponding to an intrinsic viscosity (IV), measured in a solution of 1 g polymer in 100 ml dichloroacetic acid at 25°C of ≤ 0.5 dl/g, preferably from 0.3 to 0.5 dl/ g, in particular from 0.3 to 0.45 dl/g and
(iv) an enthalpy of fusion Δ H ₘ of ≥ 47J/g, preferably in the range 47-62 J/g and
(v) a hot crystallization temperature on cooling from the melt T_{hc} of ≥200°C, preferably in the range of 200-220°C and
(vi) a hot crystallization enthalpy on cooling from the melt Δ H _{hc} of ≥42 J/g, preferably in the range of 42-55 J/g and
(vii) optionally a cold crystallization temperature on heating of the amorphous polymer T _{cc} of ≤130°C, more preferably in the range of 110-130°C.

The PET according to the invention particularly preferably has the features (i) to (vi) mentioned above and a cold crystallization enthalpy ΔH _{cc} in the range of 30-35 J/g.

As described above, the polymer material of the present invention comprises at least 90% by weight of polyethylene terephthalate polymer, the remainder amount can be customary additives, for example TiO₂ as a matting or whitening agent and other customary additives, such as pigments, flame retardants, crystallization aids, nucleating agents, flow improvers, biocides.

### Production of the PET material

The polyethylene terephthalate polymer of the present invention can be produced by various pathways. Therefore, the instant invention is not limited to the pathways/methods described below.

A preferred method would be production by means of polycondensation from the monomers, either virgin or recycled, including BHET, for example.

Another preferred method includes the glycolysis method, which is essentially of interest if one wants to process recycling material (e.g. flakes from bottles).

The PET material of the present invention can be produced by polycondensation from the monomers terephthalic acid and ethylene glycol. To do this, the monomers are first esterified under pressure and then, in a second step, polycondensed, typically under vacuum or reduced pressure at temperatures above the melting point of PET. This can be done both in a discontinuous and in a continuous process. The desired target viscosity is set by selecting suitable process conditions (temperature, pressure, residence time). In this context, it has surprisingly been found that polyethylene terephthalate polymers having a specific viscosity (SV) in the range from 425 to 650, which are usually unsuitable for melt spinning, are well suited for the production of nonwovens using the melt-blown process.

Alternatively, the PET material of the present invention can also be obtained by hydrolytic treatment of a PET polymer containing silicate ester groups of the Si-OC type. Such PET copolymers are used to produce textile fibers which have so-called low-pilling properties and are described for example in FR-A-2290511, DE-A-1720647, DE-A-4111066 and U.S.3,335,211). This effect is achieved through a reduction in molecular weight by cleaving the Si-OC linkages connecting the polyester chains. Typically, the hydrolytic cleavage takes place during the aqueous dyeing process of the textiles, and results in a reduction of the molecular weight and intrinsic viscosity respectively. In the case of the instant invention, the shortening of the polymer chains must already take place before fiber formation. Therefore, hydrolysis can be achieved by treating the corresponding silicon-containing copolyester, e.g. with hot steam for e.g. 2-6 hours. The hydrolytic cleavage is illustrated by the following scheme:

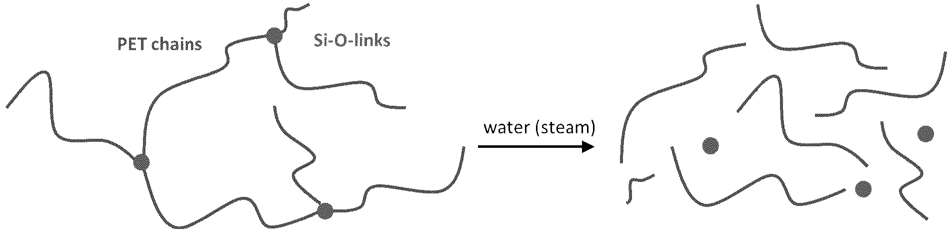

As mentioned, another preferred method includes the glycolysis method. Here, the PET material according to the invention can be produced by glycolysis of commercially available PET. For this purpose, a commercially available PET, which usually has a specific viscosity SV>800, is mixed with glycol in an extruder above the melting point, typically in the temperature range from 265°C. to 290°C.

The amount of glycol to be used is depending on the nature of the extruder. Thus, the amount of glycol and the residence time in the extruder must be sufficient to achieve a reduction of the intrinsic viscosity so that the PET has a molecular weight corresponding to an intrinsic viscosity (IV), measured in a solution of 1 g of polymer in 100 ml of dichloroacetic acid at 25°C, of ≦0.5 dl/g, preferably from 0.3 to 0.5 dl/g, in particular from 0.3 to 0.45 dl/g.

The glycolysis is illustrated by the following scheme:

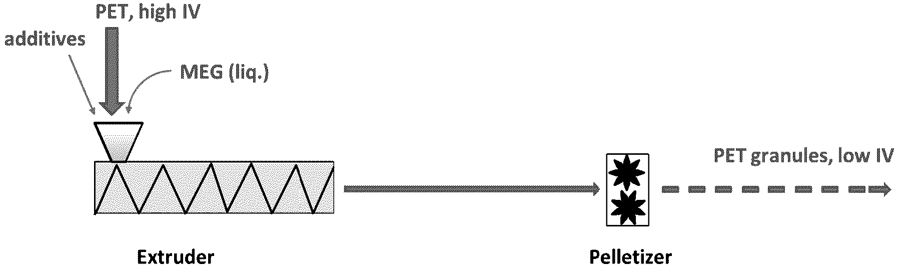

Another object is thus a polymer material comprising at least 90% by weight of polyethylene terephthalate polymer, said PET polymer comprising at least 90 mol% of the repeating structural unit of the formula 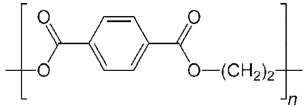 characterized in that the polyethylene terephthalate polymer has:
(i) a specific solution viscosity (SV) from 425 to 650 and
(ii) a melt viscosity eta (in Pa*s) at shear rates of 200 s⁻¹ (eta 200) and 1200 s⁻¹ (eta 1200) from 5 to 40 at 270°C with the proviso that the ration of eta at shear rate of 200 s⁻¹ over eta at shear rate 1200 s⁻¹ (Q-eta) is from 0.92 to 1.08. said polymer material does not include any thermoplastic polymer other than the aforementioned polyethylene terephthalate polymer and is obtainable by glycolysis of a PET having an intrinsic viscosity IV>0.6 dl/g.

In a preferred embodiment, the polymer material comprises at least 95% by weight of polyethylene terephthalate polymer, said PET polymer comprising at least 90 mol% of the repeating structural unit of the formula 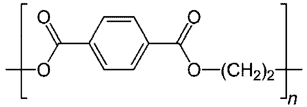 characterized in that the polyethylene terephthalate polymer has:
(i) a specific solution viscosity (SV) from 425 to 650 and
(ii) a melt viscosity eta (in Pa*s) at shear rates of 200 s⁻¹ and 1200 s⁻¹ from 5 to 40 at 270°C with the proviso that the ration of eta at shear rate of 200 s⁻¹ over eta at shear rate 1200 s⁻¹ (Q-eta) is from 0.92 to 1.08, and
(iii) a molecular weight corresponding to an intrinsic viscosity (IV) of ≤ 0.5 dl/g, preferably from 0.3 to 0.5 dl/g, in particular from 0.3 to 0.45 dl/g and
(iv) an enthalpy of fusion Δ H ₘ of ≥ 47J/g and
(v) a hot crystallization temperature on cooling from the melt T_{hc} of ≥200°C and
(vi) a hot crystallization enthalpy during cooling from the melt ΔH_{hc} of ≥42 J/g,
(vii) and optionally a cold crystallization temperature when heating the amorphous polymer T_{cc} of ≤130°C,
said polymer material does not include any thermoplastic polymer other than the aforementioned polyethylene terephthalate polymer and is obtainable by glycolysis of a PET having an intrinsic viscosity IV>0.6 dl/g.

### Production of the melt blown fiber

The melt-blown fibers or melt-blown non-woven are produced using known measures and systems.

As mentioned before, the production of melt-blown fibers or melt-blown non-woven can be performed on existing apparatus and does not require a special geometry of the blowing duct or special distance to the conveyor belt.

Typically, such melt-blowing is performed within the general parameters, such as a process temperature between 290-320°C, conveyor belt speed of between 10-30 m/min, a throughput of between 20-60 kg/h of polymer material, a process air volume of between 400-1000 m 3 /h, a process air temperature of between 300-320°C and typical nozzle distance of between 150-350mm. In some embodiments, an additional air stream ("secondary air stream") is applied, e.g. in the form of hot air, to allow a more controlled solidification and/or crystallization of the fresh formed fibers, so that the binding properties of such fibers in the formation of the melt-blown nonwoven is optimized.

Typical parameter of the melt-blowing to produce melt-blown fibers and melt-blown non-woven are described in EP-A-370684 and EP-A-3666949, such melt-blowing parameter are included in the instant specification by reference.

### Melt-blown non-woven

Melt-blown non-woven within the meaning of the present invention are non-woven produced by melt-blowing process, i.e. nonwovens that were produced using melt blown processes.

Typically, melt-blown non-wovens differ from other spunbonded nonwovens, such as spunbond and can be distinguished from each other by a skilled worker. Typical distinguishing features are - inter alia - fiber diameters and the uniformity of the fiber diameter.

The melt blown webs produced according to the invention can have various basis weight, depending on their later use. Preferably, the melt blown webs produced according to the invention have a basis weight in the range from 5 to 100 g/m², preferably between 10 and 100 g/m², in particular between 10 and 80 g/m².

### Measurement methods

### Specific solution viscosity (SV)

The SV is determined in dichloro acetic acid (DCE) according to DIN 1628-5]

### Melt viscosity eta

The melt viscosity eta (in Pa*s) is measured at shear rates of 200 s⁻¹ and 1200 s⁻¹) at 270°C ) according to ISO 11443 "Plastics - Determination of the fluidity of plastics using capillary and slit-die rheometers"

### Intrinsic Viscosity (IV)

The IV is measured according to ASTM D4603.

### Enthalpy of fusion ΔHₘ

The enthalpy of fusion ΔH ₘ is measured using DSC according to DIN EN ISO 11357 3.

### Hot crystallization temperature T_{hc}

The hot crystallization temperature T_{hc} is measured using DSC during cooling from the melt according to DIN EN ISO 11357 3.

### Cold crystallization temperature T_{cc}

The cold crystallization temperature T_{cc} is measured using DSC when heating the amorphous polymer according to DIN EN ISO 11357 3.

### Weight per unit area (fleece)

The basis weight is determined according to ISO 9073-1:2023 "Nonwovens - Test methods - Part 1: Determination of mass per unit area".

### Examples

### Example 1: Polycondensation

The polycondensation was carried out in a 100 kg batch pilot plant. The esterification was carried out under pressure at 1.2 barg and 262°C according to a standard procedure. Sodium acetate was added as a solution in MEG followed by the catalyst antimony triglycolate dissolved in ethylene glycol. The polycondensation was then carried out at a pressure of <1 mbar and a temperature of 285° C. up to a torque of 110 Nm, which corresponds to an IV of approx. 0.5 dl/g. The polymer was then discharged through a water bath and granulated.

The four batches were run identically and then combined to achieve the required quantity for the melt blown test.

### Reaction parameters:

| | **P4211103** | **P4211104** | **P4211105** | **P4211106** |
|---|---|---|---|---|
| Composition | 0.2% Na acetate, 200ppm Sb as ATG | 0.2% Na acetate, 200ppm Sb as ATG | 0.2% Na acetate, 200ppm Sb as ATG | 0.2% Na acetate, 200ppm Sb as ATG |
| Torque (Nm) | 110 | 110 | 110 | 110 |
| PC time (min) | 67 | 73 | 72 | 73 |

### Polymer properties:

| | **P4211103** | **P4211104** | **P4211105** | **P4211106** |
|---|---|---|---|---|
| SV | 616 | 615 | 615 | 614 |
| IV (dl/g) | 0.489 | 0.488 | 0.488 | 0.487 |
| COOH (meq/kg) | 25.4 | 22.5 | 22.5 | 22.5 |
| DEG (%(w/w)) | 1.02 | 1.08 | 1.08 | 1.11 |
| L* | 71.4 | 72.2 | 72.0 | 72.8 |
| a* | -2.0 | -1.9 | -2.3 | -2.0 |
| b* | 6.3 | 5.1 | 7.1 | 6.0 |
| Na (ppm) | 566 | 564 | 565 | 561 |

### Thermal properties:

| | **P4211103** | **P4211104** | **P4211105** | **P4211106** |
|---|---|---|---|---|
| T_{g} (°C) | 77.1 | 76.7 | 76.8 | 76.0 |
| T_{cc} (°C) | 127.7 | 127.2 | 126.5 | 126.9 |
| Δ H_{cc} (J/g) | 31.3 | 31.3 | 31.4 | 32.4 |
| Tₘ (°C) | 257.2 | 257.4 | 256.8 | 256.2 |
| Δ Hₘ (J/g) | 49.9 | 49.2 | 49.1 | 52.2 |
| T_{hc} (°C) | 215.6 | 215.8 | 215.8 | 215.4 |
| Δ H _{hc} (J/g) | 46.8 | 48.3 | 47.7 | 50.4 |
| Δ T onset - peak max | 3.72 | 3.42 | 3.62 | 3.60 |

According to the polymer data, all four batches are of comparable quality and the deviations are within the usual limits for the pilot plant. The time required for the polycondensation to the desired torque of 110 Nm is comparable for all batches. The corresponding IV value is 0.49 dl/g in all samples. The determined Na value is on the expected level. The hot crystallization temperature of 215 - 216 °C also agrees with the preliminary tests and is regarded as a suitable starting point for further tests. The temperature difference between the start of crystallization during cooling from the melt at 10 K/min during a DSC experiment and the peak maximum is a measure of the sharpness of the crystallization peak, ie of the rate of crystallization. For standard PET, this value is in the range of 8 to 10 °C.

### Example 2: Controlled solvolytic molecular weight reduction

### Extrusion of PET + MEG (I)

### PET can be unmodified or a copolymer to influence crystallization behavior.

2a) The twin screw extruder is equipped with a devolatilization zone and initial trials with added water showed only a lower IV decrease than expected. From this it was concluded that most of the water is lost through the degassing zone, which is why the PET was used undried. In order to achieve the intended reduction in molecular weight, ethylene glycol was metered into the feed zone of the extruder at a defined rate using a peristaltic pump. The higher boiling point enables a more efficient decrease in molecular weight (glycolysis) compared to the much more volatile water.

| **ID** | **85220608** |
|---|---|
| **PET type** | **RT22** |
| **MEG (ml/min)** | 6.2 |
| **Temp. zone 1-7** | 285 |
| **Melt temp. (°C)** | 278 |
| **Extruder rpm** | 200 |
| **Extruder dosing rpm** | 70 |
| Throughput (g/min) | 560 |
| **SV-DCE** | 498 |
| **IV** | 0.41 |
| **Yield (kg)** | 308 |

| **Thermal data (DSC)** | |
|---|---|
| **T_{g}** (°C) | 67.3 |
| **T_{cc}** (°C) | 127.1 |
| **ΔH_{cc}** (J/g) | 35.7 |
| **Tₘ** (°C) | 259.6 |
| **ΔHₘ** (J/g) | 52.8 |
| **T_{hc}** (°C) | 209.6 |
| **ΔH_{hc}** (J/g) | 47.4 |
| **ΔT(onset** - **peak)** (°C) | 9:27 |

### Repetition of 2a) under modified conditions

**2b)**

| **ID** | **B5221101** |
|---|---|
| **PET type** | **RT22** |
| **MEG dosage (ml/min)** | 6.39 |
| **Temp zone 1-7** | 285 |
| **Melt temp. (°C)** | 277 |
| **Extruder rpm** | 200 |
| **Extruder dosing rpm** | 70 |
| **SV-DCE** | 549 |
| **IV** | 0.44 |
| **Yield (kg)** | 340 |

| **Thermal data (DSC)** | |
|---|---|
| **T_{g}** (°C) | 65.7 |
| **T_{cc}** (°C) | 133.1 |
| **ΔH_{cc}** (J/g) | 37.3 |
| **Tₘ** (°C) | 256.7 |
| **ΔHₘ** (J/g) | 52.3 |
| **T_{hc}** (°C) | 200.8 |
| **ΔH_{hc}** (J/g) | 47.2 |
| **ΔT(onset** - **peak)** (°C) | 10.53 |

### Example 3: Controlled solvolytic molecular weight reduction

### Extrusion of PET + MEG (I) + Na-Acetate (dissolved in MEG)

As example 2, but with unfrosted PET without TiO₂. Sodium acetate was added in dissolved form along with the ethylene glycol at a defined rate using a peristaltic pump.

| **ID** | **B5220609** |
|---|---|
| **PET type** | RT5030 |
| **MEG/Na acetate dosage (ml/min)** | 1.68 |
| **Temp zone 1-7 (°C) Melt temp. (°C)** | 285 278 |
| **Extruder rpm** | 200 |
| **Extruder dosing rpm** | 70 |
| **Throughput (g/min)** | 545 |
| **SV-DCE** | 508 |
| **IV (dl/g)** | 0.41 |
| **Yield (kg)** | 312 |

| **Thermal data (DSC)** | |
|---|---|
| **T_{g} (°C)** | 74.2 |
| **T_{cc} (°C)** | 114.8 |
| **ΔH_{cc} (J/g)** | 31:3 |
| **Tₘ (°C)** | 259.0 |
| **ΔHₘ (J/g)** | 47.2 |
| **T_{hc} (°C)** | 217.2 |
| **ΔH_{hc} (J/g)** | 43.6 |
| **ΔT(onset - peak) (°C)** | 3.44 |

### Example 4: Controlled solvolytic molecular weight reduction

### Extrusion of PET + MEG (I) + Na acetate (s)

As Example 2, but ethylene glycol was added to the granules and thoroughly mixed before processing. In addition to MEG, sodium acetate powder was also sprinkled onto the granules during mixing. The PET material was RT22, a semi-dull, antimony-free polyester grade with an IV of 0.64. The sodium acetate is below its melting point at the processing temperature and is dispersed in the polymer melt primarily by shear. On the other hand, a chemical reaction takes place, which is noticeable by the smell of acetic acid and leads to chain scission and the formation of sodium terephthalate end groups. After extrusion, the polymer strands were cooled in a water bath and granulated. The surface of the extruded polymer strand was smooth and showed no signs of roughness.

### Process parameters:

| **ID** | **B5211005** |
|---|---|
| PET type | RT22 (undried), Sb-free, 320kg |
| Composition | 650ppm Na as Na acetate 780ppm MEG |
| Temp Zone 1-7 (°C) | 275 |
| Extruder RPM | 140 |
| Melt Temp.(°C) | 269 |

### Polymer properties:

| **ID** | **B5211005** |
|---|---|
| SV-DCE | 654 |
| IV (dl/g) | 0.51 |
| COOH (meq/kg) | 39.5 |
| DEG (%) | 0.93 |
| L* | 89.2 |
| a* | -1.3 |
| b* | 9.9 |
| Na (ppm) | 652 |

### Thermal properties:

| **ID** | **B5211005** |
|---|---|
| T_{g} (°C) | 76.5 |
| T_{cc} (°C) | 113.5 |
| ΔH_{cc} (J/g) | 26.7 |
| Tₘ (°C) | 255.7 |
| ΔHₘ (J/g) | 47.4 |
| T_{hc} (°C) | 219.2 |
| ΔH_{hc} (J/g) | 48.0 |
| ΔT (onset - peak max) | 5.32 |

### Example 5: Molecular weight reduction by controlled cleavage of bonds susceptible to hydrolysis

A PET polymer containing hydrolytically cleavable bonds based on silicate ester bonds of the Si-OC type is subjected to a treatment with hot steam in a closed container. For this purpose, 50 kg of Si-containing PET were treated with steam in a hopper for 4 hours so that the condensate that formed could drain off through the bottom drain. Compressed air (approx. 2 m ³/h) was then blown through from below and the granulate was predried in this way.

| **PET type** | **RT1531** |
|---|---|
| **Steam treatment** | 4 hours |
| **IV (dl/g)** | 0.43 |
| **SV-Cresol** | 525 |
| **SV-DCE** | 415 |
| ΔSV | 110 |
| **Yield (kg)** | 311 |

| **Thermal data (DSC , average of 6 runs)** | |
|---|---|
| **T_{g} (°C)** | 80.1 |
| **Tₐₙₙ (°C)** | 128.9 |
| **ΔHₐₙₙ (Y/g)** | 4.1 |
| **Tₘ (°C)** | 256.2 |
| **ΔHₘ (J/g)** | 52.6 |
| **T_{hc} (°C)** | 205.0 |
| **ΔH_{hc} (J/g)** | 47.4 |

### Example 6

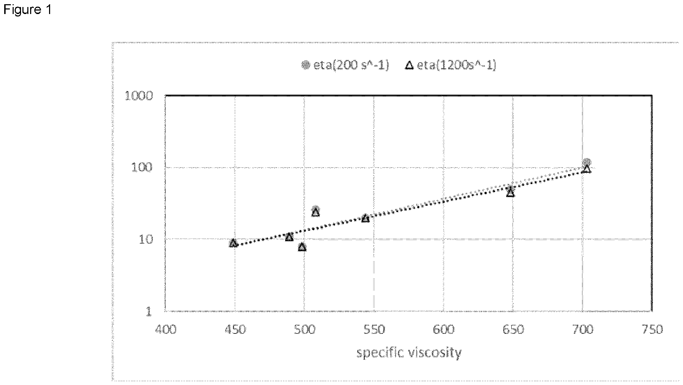

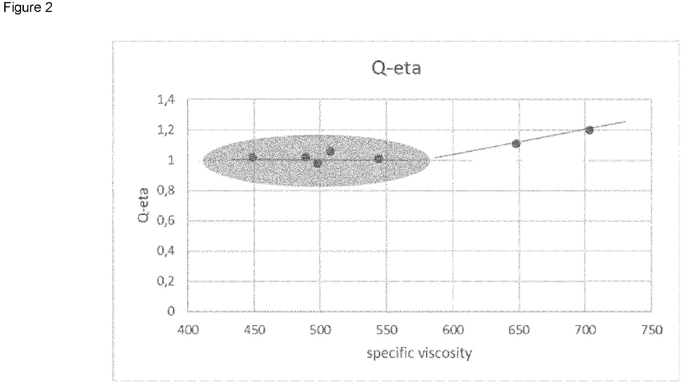

Melt and solution viscosity follow a linear correlation on a logarithmic scale in the observed range (see Figure 1). Shear rated dependency becomes more prominent at higher molecular weights or higher specific viscosity, respectively. While not as obvious from Figure 1, this can be seen clearly from the quotient Q-eta, which is defined as melt viscosity eta at 200 s⁻¹ over eta at 1200 s⁻¹ (Figure 2). Q-eta is a measure for the shear rate dependency and structural viscosity. It was found that structural viscosity is unfavorable for the purpose of melt blowing and therefore Q-eta should be close to unity.

The samples B5220608, B5221101 and B5220609 correspond to the examples 2a), 2b) and 3 respectively. The other samples were prepared as described for Example 2 according to the following table:

| | **B5220409** | **B5220410** | **B5220502** | **B5220509** |
|---|---|---|---|---|
| **PET type** | RT22 | RT22 | RT22 | RT22 |
| **MEG content (wt.-%)** | 0,24 | 0 | 0,48 | 0,78 |
| **Temp. Zone 1-7 (°C)** | 285 | 285 | 285 | 285 |
| **Extruder rpm** | 100 | 100 | 100 | 100 |
| **Dosing rpm** | 30 | 30 | 30 | 35 |
| **Melt Temp. (°C)** | 279 | 279 | 278 | 279 |

The following table provides the corresponding data for SV and melt viscosity.

| ID | **B5 220608** | **B5 220609** | **B5 221101** | **B5 220409** | **B5 220410** | **B5 220502** | **B5 220509** |
|---|---|---|---|---|---|---|---|
| **SV** | 498 | 508 | 489 | 648 | 703 | 544 | 449 |
| **eta(0)** | 9 | 26 | 11 | 50 | 124 | 20 | 9 |
| **eta(200)** | 8 | 26 | 11 | 50 | 118 | 20 | 9 |
| **eta(1200)** | 8 | 24 | 11 | 45 | 98 | 20 | 9 |
| **Q-eta** | 0,98 | 1,06 | 1,02 | 1,11 | 1,2 | 1,01 | 1,02 |

## Claims

1. Polymer material comprising at least 90% by weight of polyethylene terephthalate polymer, said PET polymer comprising at least 90 mol% of the repeating structural unit of the formula 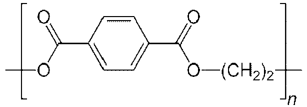 **characterized in that** the polyethylene terephthalate polymer has:
(i) a specific solution viscosity (SV) from 425 to 650 and
(ii) a melt viscosity eta (in Pa*s) at shear rates of 200 s⁻¹ (eta 200) and 1200 s⁻¹ (eta 1200) from 5 to 40 with the proviso that the ration of eta at shear rate of 200 s⁻¹ over eta at shear rate 1200 s⁻¹ (Q-eta) is from 0.92 to 1.08, with the proviso that the polymer material does not include any thermoplastic polymer other than the aforementioned polyethylene terephthalate polymer.

2. Polyester according to claim 1, **characterized in that** the PET has a molecular weight corresponding to an intrinsic viscosity (IV), measured in a solution of 1 g of polymer in 100 ml of dichloroacetic acid at 25°C. of ^0.5 dl/g, preferably from 0.3 to 0.5 dl/g, in particular from 0.3 to 0.45 dl/g.

3. Polyester according to claim 1 or 2, **characterized in that** the PET has an enthalpy of fusion ΔH m of ≥ 47J/g, preferably in the range 47-62 J/g.

4. Polyester according to claim 1, 2 or 3, **characterized in that** the PET has a hot crystallization temperature during cooling from the melt T_{hc} of ≥200°C, preferably in the range of 200-230°C.

5. Polyester according to one or more of claims 1 to 4, **characterized in that** the PET has a hot crystallization enthalpy when cooling from the melt ΔH _{hc} of ≥42 J/g, preferably in the range of 42-55 J/g.

6. Polyester according to one or more of claims 1 to 5, **characterized in that** the PET has a cold crystallization temperature when heating the amorphous polymer T_{cc} of ≤130°C, more preferably in the range of 110-130°C.

7. Polyester according to one or more of claims 1 to 6, **characterized in that** the PET has a melting temperature Tₘ in the range of 250-265°C.

8. Polyester according to one or more of claims 1 to 7, **characterized in that** the PET has a glass transition temperature T_{g} in the range from 65-75°C

9. Polyester according to one or more of claims 1 to 8, **characterized in that** the PET has a cold crystallization enthalpy ΔH_{cc} in the range of 30-35 J/g.

10. Polyester according to one or more of claims 1 to 9, **characterized in that** at least 95% by weight of polyethylene terephthalate polymer are present and said PET polymer comprising at least 90 mol% of the repeating structural unit of the formula 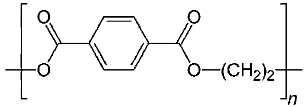 and **in that** the polyethylene terephthalate polymer has:
(i) a specific solution viscosity (SV) from 425 to 650 and
(ii) a melt viscosity eta (in Pa*s) at shear rates of 200 s⁻¹ and 1200 s⁻¹ from 5 to 40 with the proviso that the ration of eta at shear rate of 200 s⁻¹ over eta at shear rate 1200 s⁻¹ (Q-eta) is from 0.92 to 1.08, and
(iii) a molecular weight corresponding to an intrinsic viscosity (IV) of ≤ 0.5 dl/g,
preferably from 0.3 to 0.5 dl/g, in particular from 0.3 to 0.45 dl/g and and the polymer material does not include any thermoplastic polymer other than the aforementioned polyethylene terephthalate polymer.

11. Polyester according to one or more of claims 1 to 9, **characterized in that** at least 95% by weight of polyethylene terephthalate polymer are present and said PET polymer comprising at least 90 mol% of the repeating structural unit of the formula 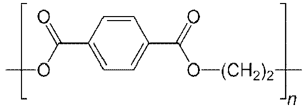 and **in that** the polyethylene terephthalate polymer has:
(i) a specific solution viscosity (SV) from 425 to 650 and
(ii) a melt viscosity eta (in Pa*s) at shear rates of 200 s⁻¹ and 1200 s⁻¹ from 5 to 40 with the proviso that the ration of eta at shear rate of 200 s⁻¹ over eta at shear rate 1200 s⁻¹ (Q-eta) is from 0.92 to 1.08, and
(iii) a molecular weight corresponding to an intrinsic viscosity (IV) of ≤ 0.5 dl/g, preferably from 0.3 to 0.5 dl/g, in particular from 0.3 to 0.45 dl/g and
(iv) an enthalpy of fusion Δ H ₘ of ≥ 47J/g and
(v) a hot crystallization temperature on cooling from the melt T_{hc} of ≥200°C and
(vi) a hot crystallization enthalpy during cooling from the melt **ΔH_{hc}** of ≥42 J/g,
(vii) and optionally a cold crystallization temperature when heating the amorphous polymer T_{cc} of ≤130°C,
and the polymer material does not include any thermoplastic polymer other than the aforementioned polyethylene terephthalate polymer.

12. Polymer material comprising at least 90% by weight of polyethylene terephthalate polymer, said PET polymer comprising at least 90 mol% of the repeating structural unit of the formula 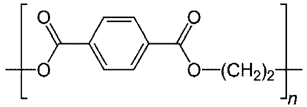
**characterized in that** the polyethylene terephthalate polymer has:
(i) a specific solution viscosity (SV) from 425 to 650 and
(ii) a melt viscosity eta (in Pa*s) at shear rates of 200 s⁻¹ (eta 200) and 1200 s⁻¹ (eta 1200) from 5 to 40 at 270°C with the proviso that the ration of eta at shear rate of 200 s⁻¹ over eta at shear rate 1200 s⁻¹ (Q-eta) is from 0.92 to 1.08.
said polymer material does not include any thermoplastic polymer other than the aforementioned polyethylene terephthalate polymer and is obtainable by glycolysis of a PET having an intrinsic viscosity IV>0.6 dl/g.

13. Polyester according to claim 12, **characterized in that** the polyethylene terephthalate polymer has (iii) a molecular weight corresponding to an intrinsic viscosity (IV) of ≤ 0.5 dl/g, preferably from 0.3 to 0.5 dl/g, in particular from 0.3 to 0.45 dl/g.

14. Polyester according to claim 13, **characterized in that** the polyethylene terephthalate polymer has
(iv) an enthalpy of fusion Δ H ₘ of ≥ 47J/g and
(v) a hot crystallization temperature on cooling from the melt T_{hc} of ≥200°C and
(vi) a hot crystallization enthalpy during cooling from the melt **ΔH_{hc}** of ≥42 J/g,
(vii) and optionally a cold crystallization temperature when heating the amorphous polymer T_{cc} of ≤130°C,

15. Process for the production of meltblown nonwovens, **characterized in that** a polyester according to one of claims 1 to 14 is used.

16. Use of a polyester according to one of claims 1 to 14 for the production of melt-blow nonwovens.

17. Melt blown nonwoven containing melt blown fibers made from a polyester according to one of claims 1 to 14.
